(19) Europäisches Patentamt
European Patent Office
Office européen des brevets

(11) EP 1 449 283 B1

(12) EUROPÄISCHE PATENTSCHRIFT

(45) Veröffentlichungstag und Bekanntmachung des Hinweises auf die Patenterteilung:
**23.11.2005 Patentblatt 2005/47**

(21) Anmeldenummer: **02803395.9**

(22) Anmeldetag: **20.11.2002**

(51) Int Cl.⁷: **H01S 3/16**

(86) Internationale Anmeldenummer:
**PCT/EP2002/013027**

(87) Internationale Veröffentlichungsnummer:
**WO 2003/044911 (30.05.2003 Gazette 2003/22)**

(54) **VERSTÄRKERMEDIUM FÜR FESTKÖRPER-FARBSTOFFLASER**

AMPLIFYING MEDIUM FOR SOLID-STATE DYE LASERS

MILIEU AMPLIFICATEUR POUR LASER A COLORANTS A SOLIDE

(84) Benannte Vertragsstaaten:
**AT BE BG CH CY CZ DE DK EE ES FI FR GB GR IE IT LI LU MC NL PT SE SK TR**

(30) Priorität: **20.11.2001 DE 10156842**

(43) Veröffentlichungstag der Anmeldung:
**25.08.2004 Patentblatt 2004/35**

(73) Patentinhaber: **BASF Aktiengesellschaft**
**67056 Ludwigshafen (DE)**

(72) Erfinder:
- **LEYRER, Reinhold, J.**
  **67125 Dannstadt (DE)**
- **HAMERS, Christoph**
  **67071 Ludwigshafen (DE)**
- **SCHÖPKE, Holger**
  **69151 Neckargemünd (DE)**

(74) Vertreter: **Reitstötter - Kinzebach**
**Patentanwälte**
**Sternwartstrasse 4**
**81679 München (DE)**

(56) Entgegenhaltungen:
**EP-A- 0 955 323**
**WO-A-01/18283**
**WO-A-01/62830**

- **FROLOV S V ET AL: "Laser-like emission in opal photonic crystals" OPTICS COMMUNICATIONS, NORTH-HOLLAND PUBLISHING CO. AMSTERDAM, NL, Bd. 162, Nr. 4-6, 15. April 1999 (1999-04-15), Seiten 241-246, XP004165466 ISSN: 0030-4018**
- **KUMACHEVA E ET AL: "THREE-DIMENSIONAL ARRAYS IN POLYMER NANOCOMPOSITES" ADVANCED MATERIALS, VCH VERLAGSGESELLSCHAFT, WEINHEIM, DE, Bd. 11, Nr. 3, 11. Februar 1999 (1999-02-11), Seiten 231-234, XP000803280 ISSN: 0935-9648**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 449 283 B1

Printed by Jouve, 75001 PARIS (FR)

**Beschreibung**

Die vorliegende Erfindung betrifft Festkörper-Farbstofflaser und insbesondere ein Verstärkermedium für Festkörper-Farbstofflaser, welches auf dem Prinzip der räumlich verteilten Rückkopplung (distributed feedback) beruht.

Laser (Light amplification by stimulated emission of radiation) sind Strahlungsquellen für kohärente, quasimonochromatische und scharfgebündelte Strahlung im sichtbaren Bereich und in den angrenzenden Bereichen des elektromagnetischen Spektrums (Ferninfrarot-, Infrarot-, Ultraviolett- und Röntgenstrahlung). Laser werden in allen Bereichen der Wissenschaft und Technik eingesetzt. Die wichtigsten Anwendungen verwenden Laserlicht in einem Wellenlängenbereich zwischen 300 und 1.800 nm.

Im Prinzip besteht jeder Laser aus 3 Komponenten: einem aktiven Medium bzw. Lasermedium (beispielsweise einem Gas, einem Festkörper, wie etwa einem Kristall oder einer Diode, oder einer Flüssigkeit), von dem die optischen Eigenschaften des Lasers weitgehend bestimmt werden; einer Pumpquelle (beispielsweise einer Blitzlampe, einem Pumplaser oder einer elektrisch betriebenen Gasentladung), die dem aktiven Medium Energie zuführt; und schließlich einem Rückkopplungsmedium bzw. Laserresonator, der für die Rückkopplung und damit die induzierte Emission der Strahlung sorgt. In der vorliegenden Anmeldung werden die Begriffe Lasermedium oder aktives Medium synonym verwendet. Unter dem Begriff "Verstärkermedium" soll hier das System aus aktivem Medium und Rückkopplungsmedium verstanden werden.

Wenn Licht auf angeregte Teilchen, d.h. Teilchen, die in höherenergetische Zustände versetzt worden sind, des aktiven Mediums fällt, können diese Teilchen dazu stimuliert werden, den Energieüberschuss als zusätzliches Licht mit der gleichen Frequenz, Phase, Polarisation und Richtung wie das einfallende Licht zu emittieren. Da der umgekehrte Prozess, d.h. die stimulierte Absorption von Licht durch nichtangeregte Teilchen des aktiven Mediums ebenfalls möglich ist, tritt insgesamt eine Verstärkung nur dann auf, wenn sich mehr Teilchen im angeregten als im nichtangeregten zustand befinden, d.h. wenn eine Besetzungsinversion der atomaren Energieniveaus hergestellt und aufrechterhalten wird. Das Verstärkermedium muss daher Teilchen, beispielsweise Fuoreszenzfarbstoffe, enthalten, die durch die Pumpquelle angeregt werden können und eine ausgeprägte stimulierte Emission von elektromagnetischer Strahlung zeigen. Außerdem ist ein optischer Rückkopplungsmechanismus erforderlich, so dass ein Resonator für das von den aktiven Teilchen emittierte Laserlicht gebildet wird. Der einfachste Resonator besteht aus zwei sich gegenüberliegenden Spiegeln, zwischen denen das Verstärkermedium angeordnet ist.

Laser werden üblicherweise in Abhängigkeit von dem verwendeten aktiven Medium klassifiziert, beispielsweise als Gas-, Farbstoff-, Festkörper- oder Halbleiter-Laser.

Farbstofflaser sind in vielen technischen Bereichen von besonderem Interesse, denn derartige Laser zeichnen sich durch einen großen kontinuierlichen Abstimmbereich der Wellenlänge der emittierten Laserstrahlung aus. Zudem lassen sich hohe Leistungen bei schmalen Linienbreiten realisieren. Die Pumpmechanismen, d.h. die Verfahren, um die aktivierbaren Teilchen des aktiven Mediums anzuregen, sind sehr flexibel. Üblicherweise wird der Farbstoff durch sogenanntes optisches Pumpen angeregt, wobei man als Energiequelle beispielsweise eine Blitzlampe oder einen Pumplaser verwendet. Typische Pumplaser sind Stickstoff-, Argonionen- und frequenzverdoppelte Nd:YAG (Neodym/Yttrium-Aluminium-Granat)-Laser. Farbstofflaser können entweder kontinuierlich oder gepulst mit Pulsenergien von bis zu 1 J und Pulsdauern im Femtosekundenbereich betrieben werden.

Die meisten Farbstofflaser arbeiten mit einem flüssigen Verstärkermedium. Es wurden aber auch Festkörper-Farbstofflaser entwickelt, bei denen Laserfarbstoffe in eine feste Matrix, beispielsweise eine Polymermatrix wie Polymethylmethacrylat (PMMA) eingebettet sind. Als Festkörper ausgebildete Verstärkermedien vermeiden -einige der Nachteile von flüssigen Verstärkermedien, wie beispielsweise Probleme bei der Handhabung oder auch die mit vielen üblicherweise verwendeten Laserfarbstoffen und Lösungsmitteln verbundenen Gesundheits- oder Umweltprobleme.

Als eine Alternative zur Verwendung von Spiegeln zur Bildung des optischen Resonators für die Laserlicht-Rückkopplung wurden auch Laser entwickelt, bei denen die optische Rückkopplung im gesamten aktiven Medium verteilt ist, so dass letztlich das aktive Medium und das Rückkoppkungsmedium ein einziges Medium sein können. Man spricht dann von einer räumlich verteilten Rückkopplung (engl.: DFB = distributed feedback). DFB-Laser können beispielsweise als Halbleiter- oder Farbstofflasern realisiert werden. Sie werden häufig verwendet, wenn ein Ein-Moden-Betrieb oder ein Laser mit veränderbarer (durchstimmbarer) Laserwellenlänge realisiert werden soll (Shank et al. "Tunable Distributed-Feedback Dye Laser", *Appl Phys Lett,* 18 (1971), 152). Die verteilte Rückkopplung wird durch ein Verstärkermedium ermöglicht, dessen optischen Eigenschaften, wie beispielsweise Brechungsindex oder Verstärkung, in Richtung der Lichtausbreitung räumlich moduliert sind. Ein übliches Verfahren, um eine derartige periodische Modulation im Verstärkermedium zu erreichen besteht darin, einen Pumplaserstrahl durch einen Strahlteiler in zwei kohärente Pumpstrahlen zu teilen, die dann unter einen bestimmten Winkel in dem aktiven Medium wieder überlagert werden. Dort kommt es durch Interferenz der Teilstrahlen zu einer räumlichen periodischen Modulation der Besetzungsdichte der absorbierenden Farbstoffmoleküle, so daß die Laserverstärkung in entsprechender Weise moduliert ist. Die Austrittswellenlänge des emittierten Laserlichts ist dann proportional zur Periodizität des Interferenzmusters. Die Emissionswellenlänge des Lasers kann daher einfach durch Veränderung der Winkel zwischen den interferierenden Teilstrahlen des Pumplasers durchgestimmt werden.

In US 3,771,065 wird ein flüssiges Verstärkermedium für Farbstofflaser vorgeschlagen, welches aus einem Laserfarbstoff besteht, der in einem cholesteren Flüssigkristall gelöst ist. Der cholestere Flüssigkristall bewirkt dabei die verteilte Rückkopplung. Derartige Verstärkermedien nutzen charakteristische optische Eigenschaften der cholesteren oder auch "chiral nematisch" genannten Phase bestimmter Flüssigkristalle: Cholestere Flüssigkristalle entwikkeln eine helikale Überstruktur, die durch eine lokale nematische Vorzugsrichtung (den sog. "director") gekennzeichnet ist, die senkrecht zur Helixachse orientiert ist. Diese nematische vorzugsrichtung variiert entlang der Helixachse mit einer helikalen Periodizität, die als "Pitch" bezeichnet wird. Der Pitch wird durch die Konzentration und die helikale Verdrillfähigkeit der chiralen Komponenten bestimmt. Als Folge der helikalen Periodizität der cholesteren Struktur und der Doppelbrechung des Flüssigkristalls ist die Lichtausbreitung entlang der Helixachse für eine der Normalmoden in einem bestimmten Wellenlängenbereich verboten. Folglich wird einfallendes Licht einer "verbotenen" Wellenlänge stark reflektiert. Die Kanten dieses Reflektionsbandes liegen bei Wellenlängen, die den Brechungsindices multipliziert mit dem helikalen "Pitch" entsprechen (vgl. deGennes, "The Physics of Liquid Cristals", *Clarendon* Press, Oxford, 1974). Wenn ein mit einem Laserfarbstoff dotierter cholesterer Flüssigkristall zwischen zwei Glasplatten in der sogenannten planaren Textur angeordnet ist, wird ein Bragg'sches Phasengitter in der Flüssigkristallschicht erzeugt. Die Laseremission erfolgt dann senkrecht zu der Filmebene und die Laserwellenlänge wird durch die helikale Periodizität bestimmt. Durch Veränderung der Temperatur der Flüssigkristallmatrix kann der Pitch und damit die Austrittswellenlänge des Farbstofflasers durchgestimmt werden. Flüssigkristall-Verstärkermedien sind jedoch als Flüssigkeiten deutlichen Umgebungseinflüssen wie Temperaturschwankungen ausgesetzt und bei vielen Anwendungen unpraktisch in der Handhabung.

Aus dem Patent US 6,141,367, auf dessen Offenbarung hiermit ausdrücklich Bezug genommen wird, ist ein Festkörper-Farbstofflaser bekannt, der ein mit Laserfarbstoffen dotiertes festes aktives Medium aufweist. Als aktives Medium wird insbesondere ein polymerer cholesterer Flüssigkristall vorgeschlagen, der in der planaren Textur angeordnet und bei einer charakteristischen Wellenlänge "eingefroren" ist. Durch verteilte Rückkopplung des emittierten Laserlichts bildet der polymere Flüssigkristall gleichzeitig den Resonator des Verstärkermediums.

Polymere cholestere Flüssigkristalle sind jedoch vergleichsweise teure und in der Herstellung aufwendige Systeme. Ein weiterer Nachteil besteht darin, daß während des Produktionsprozesses der Orientierung der Flüssigkristalle größte Aufmerksamkeit gewidmet werden muß, da diese bereits durch kleinste Verunreinigungen negativ beeinflußt werden kann.

WO-A-01/18 283 offenbart einen photonischen Kristall aus einem polymeren Dispersionsfilm in den ein Laserfarbstaff eingebracht ist. WO-A-01/62830 offenbart verfilmbare Kern/Schale-Partikel und erwähnt deren Anwendung in photonischen kristallen sowie eine mögliche Anreicherung mit Farbstaffen.

Der vorliegenden Erfindung liegt daher das technische Problem zugrunde, ein weiteres, insbesondere einfacher und preisgünstiger herstellbares Verstärkermedium für Festkörper-Farbstofflaser anzugeben. Außerdem soll ein entsprechender Farbstofflaser bereitgestellt werden.

Gelöst wird dieses Problem durch ein Verstärkermedium gemäß vorliegendem Anspruch 1.

Gegenstand der vorliegenden Erfindung ist demnach ein Verstärkermedium für einen Festkörper-Farbstofflaser, welches umfasst: ein im wesentlichen festes aktives Medium, das mindestens eine Sorte Teilchen enthält, die zur Emission von Laserlicht eines bestimmten wellenlängenbereichs angeregt werden können, und optische Rückkopplungsmittel, welche einen Resonator für das Laserlicht definieren, wobei die Rückkopplungsmittel ein im wesentlichen festes Rückkopplungsmedium umfassen, das eine periodische Struktur aufweist. Das erfindungsgemäße Verstärkermedium ist dadurch gekennzeichnet, dass das Rückkopplungsmedium ein polymerer Dispersonsfilm mit kristalliner Struktur ist.

Es ist bekannt, dass Polymerpartikel in geordneten Strukturen verfilmen können. Derartige auch als kolloidale Kristalle bezeichnete Strukturen können einen winkelabhängigen Farbeffekt zeigen, der durch Bragg-Streuung von einfallendem Licht an den Kristallebenen verursacht wird. Sobald der Abstand zwischen den Mittelpunkten der Partikel sich im Bereich der Wellenlänge der einfallenden elektromagnetischen Strahlung befindet, sind die Voraussetzungen für eine irisierende Farbgebung erfüllt.

Überraschend wurde nun gefunden, dass sich derartige kolloidale Kristalle auch als Rückkopplungsmedien zur Bildung des Resonators eines Laser-Verstärkermediums einsetzen lassen. Durch die wellenlängenabhängige Bragg-Reflexion an den Gitterstrukturen wirken derartige Dispersionsfilme nämlich für Licht von bestimmten Wellenlängen wie interne Spiegel. Die so gebildeten Refelktoren beruhen demnach auf dem Prinzip der verteilten Rückkopplung.

Die erfindungsgemäßen Verstärkermedien lassen sich durch einfache Maßnahmen kostengünstig herstellen.

Beispielsweise sind Dispersionsfilme in dem erfindungsgemäßen Verstärkermedium einsetzbar, wie sie aus T. Okubu, . Prog.Polym.Sci. 18 (1993) 481-517; und W. Luck, H. Wesslau, *Festschrift Carl Wurstler,* BASF 1960, C. A.:55:14009d, beschrieben sind. Derartige Dispersionen neigen in flüssiger Form, gegebenenfalls nach Nachreinigung, zu ausgeprägter Latex-Kristallisation.

Besonders geeignete Polymerdispersion im Sinne der vorliegenden Erfindung sind jedoch organische Kern/Schale-Partikel, deren Kern- und Schalenmaterial ein zweiphasensystem ausbilden können. Dabei ist das Schalenmaterial zu einer Matrix verfilmbar, während das Kernmaterial, d.h. die Kerne der Kern/Schale-Partikel, unter den Bedingungen der Verfilmung der Schale im wesentlichen formbeständig ist. Vorzugsweise ist der Kern durch das Schalenmaterial nicht oder nur in sehr geringem Ausmaß quellbar.

Das für die Kerne geltende Merkmal, daß sie im wesentlichen formbeständig sind, bedeutet, daß sich ihre Form und Größe im Verlauf der Verfilmung nicht so stark ändert, daß die Verwendung der Kern/Schale-Partikel zur Herstellung von Rückkopplungsmedien unmöglich wird. In der Regel sind Änderungen ihrer Abmessungen von bis zu +/- 10% ohne gravierende Nachteile zulässig.

Das Merkmal "geringe Quellbarkeit" der Kerne durch das Schalenmaterial bedeutet, daß der mittlere Durchmesser der Kerne sich um höchstens 10% des Ursprungswertes vergrößert, wenn sie in das Schalenmaterial eingebettet werden. Es ist besonders vorteilhaft, wenn die Kerne nicht nur im Schalenmaterial selbst, sondern auch in Lösungen, Dispersionen oder Schmelzen oder in flüssigen Vorstufen desselben eine möglichst geringe Quellbarkeit aufweisen.

Die periodische Struktur des Dispersionsfilms wird vorzugsweise durch Unterschiede zwischen den Brechungsindizes des Kernmaterials und der bei der Verfilmung des Schalenmaterials entstehenden Matrix hervorgerufen. Bevorzugt beträgt der Unterschied $\Delta n$ im Brechungsindex zwischen dem Kernmaterial und der Matrix mindestens 0,001, vorzugsweise mindestens 0,01, insbesondere mindestens 0,1 Einheiten. Dabei kann das Kernmaterial den höheren, die Matrix den niedrigeren Brechungsindex haben oder umgekehrt. Bevorzugt ist der erste Fall.

In den erfindungsgemäßen Kern/Schale-Partikeln beträgt das Gewichtsverhältnis von Kern : Schale 1:3 bis 20:1, vorzugsweise 2:1 bis 10:1, insbesondere 2,5:1 bis 5:1.

Für die Verwendung der Kern/Schale-Partikel zur Herstellung von Verstärkermedien für Festkörper-Farbstofflaser ist es wichtig, daß das Schalenmaterial verfilmbar ist, d.h., daß es durch einfache Maßnahmen soweit erweicht, visco-elastisch plastifiziert oder verflüssigt werden kann, daß die Kerne der Kern/Schale-Partikel zumindest Domänen regelmäßiger Anordnung ausbilden können. Das verfilmte Schalenmaterial bildet dann je nach seinem Mengenanteil in den Kern/Schale-Partikeln entweder eine kontinuierliche, alle Zwischenräume zwischen den Kernpartikeln ausfüllende Phase, eine Matrix, oder es bildet nur im Bereich der Berührungspunkte der Kernpartikel Klebepunkte, durch die diese in regelmäßiger Anordnung fixiert werden. (Das Schalenmaterial kann daher auch synomym als Matrixmaterial oder Matrixphase bezeichnet werden.) Die in der durch Verfilmung der Schale der Kern/Schale-Partikel gebildeten Matrix regelmäßig angeordneten Kerne bilden ein Beugungsgitter, das Interferenzerscheinungen hervorruft und dadurch zur verteilten Rückkopplung von Laserlicht der entsprechenden Wellenlänge führt.

Die Kerne der erfindungsgemäßen Kern/Schale-Partikel haben im wesentlichen sphärische, vorzugsweise kugelförmige Gestalt. Sie bilden bei der Verflüssigung oder Erweichung des Schalenmaterials während der Verfilmung die genannten makroskopischen Domänen kristallähnlicher Struktur aus. In vielen Fällen ordnen sich die Kerne in dieser Struktur in Form einer dichten Kugelpackung an.

Die Kerne der erfindungsgemäßen Kern/Schale-Partikel haben eine Teilchengröße von 100 bis 700 nm, vorzugsweise von 150 bis 500 nm, insbesondere von 200 bis 400 nm. Vorzugsweise weisen sie eine monodisperse Verteilung auf, d.h. sie liegen in einer engen Teilchengrößenverteilung, vor.

Zur Charakterisierung der Teilchengrößenverteilung dient der Polydispersitäts-Index P.I., der durch die folgende Formel definiert ist:

$$P.I. = (D_{90} - D_{10})/D_{50}$$

In dieser Formel bedeuten $D_{90}$, $D_{50}$ und $D_{10}$ die Teilchendurchmesser, bei denen das Integral der Verteilungsfunktion dG = f(D)*dD, worin G die Polymermasse, D der Teilchendurchmesser ist, die Werte 0,9 (= 90 Gew.-%), 0,5 (= 50 Gew.-%) bzw. 0,1 (= 10 Gew.-%) der Gesamtmasse der Polymersubstanz erreicht. Mit enger werdender Teilchengrößenverteilung nähert sich der Wert des P.I. dem Wert Null, je breiter d.h. polydisperser die Teilchengrößenverteilung ist, desto größer wird der P.I.

Die Teilchengrößenverteilung kann in an sich bekannter Weise, z.B. mit Hilfe einer analytischen Ultrazentrifuge, (siehe z.B. W.Mächtle, *Makromol. Chem.* 185 (1984), S. 1025-1039) bestimmt, und aus den erhaltenen Werten der P.I.- Wert berechnet werden. Alternativ können die Teilchengrößen auch mit einem die Lichtstreuung der Dispersionen ausnutzenden kommerziellen Gerät, z.B. dem "Autosizer 2C" der Fa. MALVERN, England, bestimmt werden. Die nach den beiden Methoden erhaltenen Werte für die Polydispersitäts-Kennzahlen sind zwar nicht direkt miteinander vergleichbar, eignen sich aber beide zur Charakterisierung der Partikelverteilung von Polymerdispersionen. Für die vorliegende Erfindung geeignete Kernpartikel weisen P.I.- Werte unterhalb 0,4, vorzugsweise unterhalb 0,3, insbesondere unterhalb 0,2 auf.

Die Materialien von Kern und Schale können, sofern sie den oben angegebenen Bedingungen genügen,

anorganischen, organischen oder auch metallischen Charakter haben oder es können Hybridmaterialien sein.

Im Hinblick auf die Möglichkeit, die erfindungsrelevanten Eigenschaften der Kerne der erfindungsgemäßen Kern/Schale-Partikel nach Bedarf zu variieren ist es jedoch zweckmäßig, daß die Kerne ein oder mehrere Polymere und/oder Kopolymere (Kern-Polymere) enthalten oder daß sie aus solchen Polymeren bestehen.

Vorzugsweise enthalten die Kerne ein einziges Polymer oder Copolymer. Aus dem gleichen Grund ist es zweckmäßig, daß auch die Schale der erfindungsgemäßen Kern/Schale-Partikel ein oder mehrere Polymere und/öder Copolymere (Schale-Polymere; Matrix-Polymere) oder Polymer-Vorprodukte und gegebenenfalls Hilfs-und Zusatzstoffe enthält, wobei die Zusammensetzung der Schale so gewählt werden kann, daß sie in nichtquellender Umgebung bei Raumtemperatur im wesentlichen formbeständig und klebfrei ist. Sofern das Schalenmaterial Hilfs- und/oder Zusatzstoffe enthält, beträgt ihr Anteil am Schalegewicht bis zu 40 Gew.-%, vorzugsweise bis zu 20 Gew.-%, insbesondere 5 bis 20 Gew.-%. Vorzugsweise bestehen Kern und Schale der erfindungsgemäßen Partikel aus den oben angegebenen Bestandteilen in den angegebenen Mengenanteilen. Die Summe der für einzelne Komponenten einem Bezugssystem (z.B. "Kernmaterial" oder "Schalenmaterial") angegebenen Prozentanteile beträgt selbstverständlich für jede individuelle Bezugsmischung 100 %. Mit der Verwendung von Polymersubstanzen als Kern- und Schalenmaterial gewinnt der Fachmann die Freiheit deren relevante Eigenschaften, wie z.B. ihre Zusammensetzung, die Teilchengröße, die mechanischen Daten, den Brechungsindex, die Glasübergangs-Temperatur, den Schmelzpunkt und das Gewichtsverhältnis von Kern:Schale.

Polymere und/oder Copolymere, die in dem Kernmaterial enthalten sind oder aus denen es besteht, sind hochmolekulare Verbindungen, die der oben für das Kernmaterial gegebenen Spezifikation entsprechen. Geeignet sind sowohl Polymerisate und Copolymerisate polymerisierbarer ungesättigten Monomerer als auch Polykondensate und Copolykondensate von Monomeren mit mindestens zwei reaktiven Gruppen, wie z.B. hochmolekulare aliphatische, aliphatisch/aromatische oder vollaromatische Polyester, Polyamide, Polycarbonate, Polyharnstoffe und Polyurethane, aber auch Aminoplast- und Phenoplast-Harze, wie z.B. Melamin/Formaldehyd-, Harnstoff/Formaldehyd und Phenol/Formaldehyd-Kondensate.

zweckmäßigerweise sind die Polymeren des Kernmaterials vernetzte (Co-)Polymere, da diese am besten der Forderung nach geringer Quellbarkeit gerecht werden. Außerdem begünstigen sie die Ausbildung von Kern/Schale-Strukturen bei der Herstellung der erfindungsgemäßen Kern/Schale-Partikel. Diese vernetzten Polymeren können entweder bereits im Verlauf der Polymerisation bzw. Polykondensation oder Copolymerisation bzw. Copolykondensation vernetzt worden sein oder sie können nach Abschluß der eigentlichen (Co-)Polymerisation bzw. (Co-)Polykondensation in einem gesonderten Verfahrensschritt nachvernetzt worden sein.

Um den erfindungsgemäßen Kern/Schale-Partikeln ein möglichst breites Anwendungsspektrum zu vermitteln ist es zweckmäßig, wenn auch das Schalenmaterial ein oder mehreren Polymeren und/oder Copolymeren enthält oder daraus besteht. Insbesondere aus wirtschaftlichen Gründen ist es vorteilhaft, wenn das Schalenmaterial ein Polymer enthält oder daraus besteht.

Für das Schalenmaterial eigenen sich, wie für das Kernmaterial, im Prinzip Polymere der oben bereits genannten Klassen, sofern sie so ausgewählt bzw. aufgebaut werden, daß sie der oben für die Schalepolymeren gegebenen Spezifikation entsprechen.

Das bedeutet, daß sie einen von den Kernpolymeren deutlich abweichenden Brechungsindex haben müssen, d.h. daß bei Einsatz hochbrechender Kernpolymere niedrig brechende Schalepolymere eingesetzt werden müssen und umgekehrt. Ferner sollen sie nicht dazu tendieren, die Kerne anzuquellen oder aufzulösen.

vorteilhaft ist das Polymermaterial der die Matrixphase bildenden Schale der erfindungsgemäßen Kern/Schale-Partikel ein elastisch deformierbares Polymer ist, z.B. ein Polymerisat mit niedriger Glasübergangstemperatur. In diesem Fall kann man es erreichen, daß die emittierte Laserwellenlänge bei Dehnung und Stauchung des Dispersionsfilms variiert.

Polymere, die den Spezifikationen für ein Matrixmaterial genügen, finden sich ebenfalls in den Gruppen der Polymerisate und Copolymerisate polymerisierbarer ungesättigter Monomerer als auch der Polykondensate und Copolykondensate von Monomeren mit mindestens zwei reaktiven Gruppen, wie z.B. der hochmolekularen aliphatischen, aliphatisch/aromatischen-oder vollaromatischen Polyester und Polyamide, aber auch der Aminoplast- und Phenoplast-Harze, wie z.B. der Melamin/Formaldehyd-, Harnstoff/Formaldehyd und Phenol/Formal-dehyd-Kondensate, die unter starker Vernetzung beim Trocknen weiter kondensieren. Analoges gilt für Epoxidharze, bestehend beispielsweise aus Mischungen von Polyepoxiden und Polyaminen oder Polyolen, die sich beim Trocknen zu harzartigen Massen verfestigen.

Zur Herstellung von Epoxidharzen werden üblicherweise Epoxid-Präpolymerisate, die beispielsweise durch Reaktion von Bisphenol A oder anderen Bisphenolen, Resorcin, Hydrochinon, Hexandiol oder anderen aromatischen oder aliphatischen Di- oder Polyolen oder Phenol-Formaldehyd-Kondensaten oder deren Mischungen untereinander mit Epichlorhydrin, Dicyclopentadien-diepoxid oder anderen Di- oder Polyepoxiden erhalten werden, mit weiteren zur Kondensation befähigten Verbindungen direkt oder in Lösung vermischt und aushärten gelassen.

Unter Berücksichtigung der obigen Bedingungen für die Eigenschaften der Schalepolymeren (= Matrixpolymeren) sind für ihre Herstellung im Prinzip ausgewählte Bausteine aus allen Gruppen organischer Filmbildner geeignet. Schalepolymere, die in organischen Lösemitteln löslich oder zumindest gut quellbar sind, und die daher mit Vorteil als Filmbildner für durch Auftrocknen bindende Matrizes eingesetzt werden, sind beispielsweise modifizierte oder nicht zu hochmolekulare Polyester, Zelluloseester wie Zelluloseacetobutyrat, Polyurethane, Silikone, polyether- oder polyestermodifizierte Silikone.

Die Herstellung der Polymerisate für den Kern und die Schale ist nicht auf ein bestimmtes Verfahren beschränkt. Es können vielmehr alle bekannten Verfahren zur Polymerherstellung herangezogen werden. vorzugsweise setzt man die Verfahren der Emulsionspolymerisation, der Suspensionspolymerisation, der Microemulsionspolymerisation, oder der Microsuspensionspolymerisation ein, die sich der radikalischen Polymerisation bedienen. Sie bieten den Vorteil, nicht empfindlich gegen Feuchtigkeit zu sein.

Zur Auslösung der Polymerisation eigenen sich Polymerisationsinitiatoren, die entweder thermisch oder photochemisch zerfallen, Radikale bilden, und so die Polymerisation auslösen. Dabei sind unter den thermisch aktivierbaren Polymerisationsinitiatoren solche bevorzugt, die zwischen 20 und 180 °C, insbesondere zwischen 50 und 80 °C zerfallen. Besonders bevorzugte Polymerisationsinitiatoren sind Peroxide wie Dibenzoylperoxid Di-tert.-Butylperoxid, Perester, Percarbonate, Perketale, Hydroperoxide, aber auch anorganische Peroxide wie $H_2O_2$, Salze der Peroxoschwefelsäure und Peroxo-dischwefelsäure Azoverbindungen, Boralkylverbindungen sowie homolytisch zerfallende Kohlenwasserstoffe.

Die Initiatoren und/oder Photoinitiatoren, die je nach den Anforderungen an das polymerisierte Material in Mengen zwischen 0,01 und 15 Gew.-%, bezogen auf die polymerisierbaren Komponenten eingesetzt werden, können einzeln oder, zur Ausnutzung vorteilhafter synergistischer Effekte, in Kombination miteinander angewendet werden.

Zur Herstellung der für diese Polymerisations-Polykondensations- oder Polyadditionsverfahren benötigten stabilen Dispersionen werden in der Regel Dispergierhilfsmittel eingesetzt.

Auch Verfahren zur Herstellung monodisperser Polymerteilchen sind in der Literatur (z.B. R.C.Backus, R.C. Williams, *J.Appl. Physics* 19, S. 1186, (1948)) bereits beschrieben worden und können vorteilhaft insbesondere zur Herstellung der Kernpolymeren eingesetzt werden. Hierbei ist lediglich darauf zu achten, daß die oben angegebenen Teilchengrößen von 0, 05 bis 5 µm, vorzugsweise von 0,1 bis 2 µm, insbesondere 0,15 bis 1,0 µm und speziell von 0,2 bis 0,7 µm und eine Polydispersitätsindex von unter 0,6, vorzugsweise von unter 0,4, insbesondere von unter 0,3 resultieren um nach der Orientierung der Kernpartikel ein Gitter zu erhalten, das eine Bragg-Streuung im sichtbaren, nahen UV- oder IR-Bereich ergibt. Anzustreben ist eine möglichst hohe Einheitlichkeit der Polymerisate.

Für die erforderliche Eigenschaftskombination, wie chemische und mechanische Resistenz, physikalische Daten ist ihre Zusammensetzung und ihr Polymerisations- und/oder Vernetzungsgrad maßgebend. Die Resistenz einer Phase gegen Auflösung oder Anquellen in oder durch die andere Phase kann außer durch Vernetzung der Polymeren auch dadurch herbeigeführt werben, daß man die Monomeren für die Polymeren von Kern und Schale so auswählt, daß man "molekular unverträgliche" "Polymere erhält, d.h. daß sie - wie z.B. Öl und Wasser - aufgrund unterschiedlicher $\delta_{-LP}$-Werte, d.h. unterschiedlicher Polarität, von Natur aus keine Tendenz zeigen, einander zu-durchdringen. Die Löslichkeitsparameter $\delta_{-LP}$ kennzeichnen die Polarität der betreffenden Verbindungen und sind für viele niedermolekulare Verbindungen und Polymere publiziert worden (Vergl. Brantrup-Immergut, "*Polymer-Handbook*", 3.Auflage, J.Wiley, New York, Kapitel VII). Je größer der Unterschied der $\delta_{-LP}$-Werte zwischen Kern- und Schalenpolymer ist, desto geringer ist die Tendenz zu molekularer Vermischung oder Quellung.

Durch die Einstellung der Reaktionsbedingungen wie Temperatur, Druck, Reaktionsdauer, Einsatz geeigneter Katalysatorsysteme, die in bekannten Weise den Polymerisationsgrad beeinflussen und die Auswahl der zu ihrer Herstellung eingesetzten Monomeren nach Art und Mengenanteil lassen sich gezielt die gewünschten Eigenschaftskombinationen der benötigten Polymeren einstellen.

Auch die Lichtbrechungseigenschaften der Polymeren werden maßgeblich von der Auswahl der zu ihrer Herstellung eingesetzten Monomeren beeinflußt. Monomere, die zu Polymeren mit hohem Brechungsindex führen, sind in der Regel solche, die entweder aromatische Teilstrukturen aufweisen, oder solche, die über Heteroatome mit hoher Ordnungszahl, wie z.B. Halogenatome, insbesondere Brom- oder Jodatome, Schwefel oder Metallionen, verfügen, d. h. über Atome oder Atomgruppierungen, die die Polarisierbarkeit der Polymeren erhöhen. Polymere mit niedrigem Brechungsindex werden demgemäß aus Monomeren oder Monomerengemischen erhalten, die die genannten Teilstrukturen und/oder Atome hoher Ordnungszahl nicht oder nur in geringem Anteil enthalten.

Eine Übersicht über die Brechungsindices verschiedener gängiger Homopolymerisate findet sich z.B. in *Ullmanns Encyklopädie der technischen Chemie, 5. Auflage, Band A21, Seite 169*. Beispiele für radikalisch polymerisierbare Monomere, die zu Polymeren mit hohem Brechungsindex führen sind:

Gruppe a): Styrol, im Phenylkern alkylsubstituierte Styrole, a-Methylstyrol, Mono- und Dichlorstyrol, Vinylnaphthalin, Isoprepenylnaphthalin, Isopropenylbiphenyl, Vinylpyridin, Isopropenylpyridin, Vinylcarbazol, Vinylanthracen, N-Benzyl-methacrylamid, p-Hydroxy-methacrylsäureanilid.

Gruppe b): Acrylate, die aromatische Seitenketten aufweisen, wie z.B. Phenyl-(meth)acrylat (=abgekürzte Schreibweise für die beiden Verbindungen Phenylacrylat und Phenylmethacrylat), Benzyl-(meth)acrylat, Benzylvinylether, sowie Verbindungen der Formeln

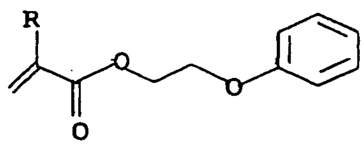

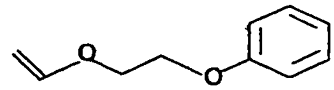

In den obigen und in weiter unten folgenden Formeln sind zur Verbesserung der Übersichtlichkeit und Vereinfachung der Schreibung Kohlenstoffketten nur durch die zwischen den Kohlenstoffatomen bestehenden Bindungen dargestellt. Diese Schreibweise entspricht der Darstellung aromatischer cyclischer Verbindungen, wobei z.B. das Benzol durch ein Sechseck mit alternierend einfachen und Doppelbindungen dargestellt wird.

Ferner sind solche Verbindungen geeignet, die anstelle von Sauerstoffbrücken Schwefelbrücken enthalten wie z.B.

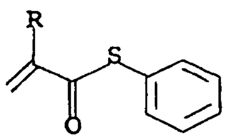

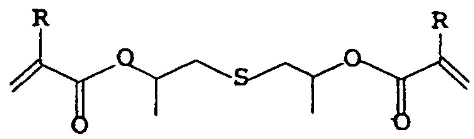

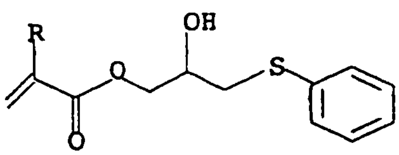

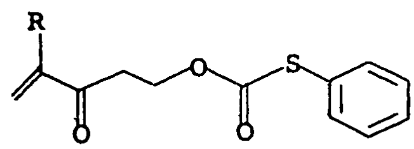

In den obigen Formeln steht R für Wasserstoff oder Methyl. Die Phenylringe dieser Monomeren können weitere Substituenten tragen. Solche Substituenten sind geeignet, die Eigenschaften der aus diesen Monomeren erzeugten polymerisate innerhalb gewisser Grenzen zu modifizieren. Sie können daher gezielt benutzt werden, um insbesondere die anwendungstechnisch relevanten Eigenschaften der erfindungsgemäßen Effektfarbmittel zu optimieren.

Geeignete Substituenten sind insbesondere CN, Halogen, $NO_2$, Alkyl mit einem bis zwanzig C-Atomen, Alkoxy mit einem bis zwanzig C-Atomen, Carboxyalkyl mit einem bis zwanzig C-Atomen, Carbonyalkyl mit einem bis zwanzig C-Atomen, oder -OCOO-Alkyl mit einem bis zwanzig C-Atomen. Die Alkylketten dieser Reste können ihrerseits gegebenenfalls substituiert sein oder durch zweibindige Heteroatome oder Baugruppen wie z.B. -O-, -S-, -NH-, -COO-, -OCO- oder -OCOO- in nicht benachbarten Stellungen unterbrochen sein.

Gruppe c): Monomere, die über Heteroatome verfügen, wie z.B. Vinylchlorid, Vinylidenchlorid, Acrylnitril, Methacrylnitril, Acrylsäure, Methacrylsäure, Acrylamid und Methacrylamid oder metallorganische Verbindungen wie z.B.

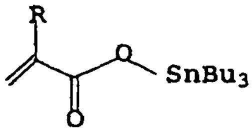

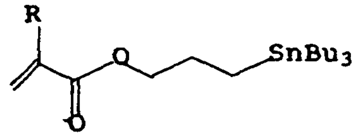

Gruppe d): Eine Erhöhung des Brechungsindex von Polymeren gelingt auch durch Einpolymerisieren Carbonsäuregruppen enthaltender Monomerer und Überführung der so erhaltenen "sauren" Polymeren in die entsprechenden Salze mit Metallen höheren Atomgewichts, wie z.B. vorzugsweise mit K, Ca, Sr, Ba, Zn, Pb, Fe, Ni, Co, Cr, Cu, Mn, Sn oder Cd.

Die oben genannten Monomeren, die einen hohen Beitrag zum Brechungsindex der daraus hergestellten Polymeren leisten, können homopolymerisiert oder untereinander copolymerisiert werden. Sie können auch mit einem gewissen Anteil von Monomeren, die einen geringeren Beitrag zum Brechungsindex leisten, copolymerisiert werden. Solche copolymerisierbaren Monomere mit niedrigerem Brechungsindex-Beitrag sind beispielsweise Acrylate, Methacrylate oder Vinylether oder Vinylester mit rein aliphatischen Resten.

In bevorzugten Ausführungsformen der vorliegenden Erfindung sind zumindest die Kernpolymeren, vorzugsweise die Polymeren von Kern und Schale, vernetzt.

Die Vernetzung kann zugleich mit der Polymerisation erfolgen, oder in einem separaten Schritt an die Polymerisation angeschlossen werden (Nachvernetzung). Eine besondere Form stellt die Vernetzung ohne Zusatzstoffe dar (Selbstvernetzung). Hierbei sind latent vernetzungsfähige, funktionelle Gruppen im Polymer bereits enthalten. Für verschiedene Anwendungen der erfindungsgemäßen Effektfarbmittel ist es vorteilhaft, die Kernpolymeren bereits bei der Polymerisation, die Schalenpolymeren nachträglich zu vernetzen.

Sind im Polymerisat entsprechende komplementäre Gruppen vorhanden, so können die oben genannten, für die Vernetzung von Polykondensaten geeigneten reaktiven Vernetzer, wie Epoxid-, Cyanat-, Isocyanat-, oder Isothiocyanatgruppen aufweisende Verbindungen, auch für die Vernetzung von Polymerisaten eingesetzt werden.

Als vernetzende Mittel für radikalisch erzeugte Polymerisate können darüberhinaus auch alle bi- oder polyfunktionellen Verbindungen eingesetzt werden, die mit den oben genannten Monomeren copolymerisierbar sind oder die nachträglich mit den Polymeren unter Vernetzung reagieren können.

Im Folgenden sollen Beispiele geeigneter Vernetzer vorgestellt werden, die zur Systematisierung in Gruppen eingeteilt werden:

Gruppe1: Bisacrylate, Bismethacrylate und Bisvinylether von aromatischen oder aliphatischen di- oder Polyhydroxyverbindungen insbesondere von Butandiol (Butandiol-di(meth)acrylat, Butandiol-bis-vinylether), Hexandiol (Hexandiol-di(meth)acrylat, Hexandiol-bis-vinylether), Pentaerythrit, Hydrochinon, Bis-hydroxyphenylmethan, Bis-hydroxyphenylether, Bis-hydroxymethyl-benzol, Bisphenol A oder mit Ethylenoxidspacern, Propylenoxidspacern oder gemischten Ethlenoxid-Propylenoxidspacern.

Weitere Vernetzer dieser Gruppe sind z.B. Di- oder Polyvinylverbindungen wie Divinybenzol oder auch Methylen-bisacrylamid, Triallylcyanurat, Divinyl-ethylenharnstoff, Trimethylolpropan-tri-(meth)acrylat, Trimethylolpropantrivinyether, Pentaerythrit-tetra-(meth)acrylat, Pentaerythrit-tetra-vinylether, sowie Vernetzer mit zwei oder mehreren verschiedenen reaktiven Enden wie z.B. (Meth)allyl-(meth)acrylate der Formeln

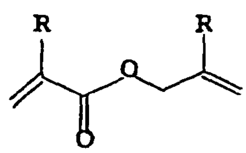
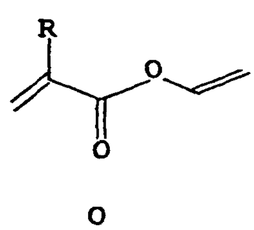
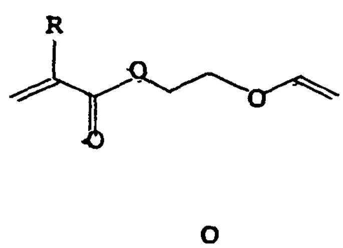

worin R Wasserstoff oder Methyl bedeutet.

Gruppe2: Reaktive Vernetzer, die vernetzend, größtenteils aber nachvernetzend wirken, z.B. bei Erwärmung oder Trocknung, und die in die Kern- bzw. Schalepolymere als Copolymere einpolymerisiert werden.

Beispiele hierfür sind: N-Methylol-(meth)acrylamid, Acrylamidoglycolsäure sowie deren Ether und/oder Ester mit C1 bis C6-Alkoholen, Acetacetoxyethyl-methacrylamid (AAEM), Diacetonacrylamid (DAAM), Glycidylmethacrylat (GMA), Methacryloyloxypropyl-trimethoxysilan (MEMO), Vinyl-trimethoxysilan, m-Isopropenyl-benzylisocyanat (TMI).

Gruppe3: Carbonsäuregruppen, die durch Copolymerisation ungesättigter Carbonsären in das Polymer eingebaut worden sind, werden über mehrwertige Metallionen brückenartig vernetzt. Als ungesättigte Carbonsäuren werden hierzu vorzugsweise Acrylsäure, Methacrylsäure, Maleinsäureanhydrid, Itaconsäure, und Fumarsäre eingesetzt. Als Metallionen eignen sich Mg, Ca, Sr, Ba, Zn, Pb, Fe, Ni, Co, Cr, Cu, Mn, Sn, Cd. Besonders bevorzugt sind Ca, Mg und Zn.

Gruppe4: Nachvernetzende Additive. Hierunter versteht man bis- oder höherfunktionalisierte Additive, die mit dem Polymer (durch Additions- oder vorzugsweise Kondensationsreaktionen) irreversibel unter Ausbildung eines Netzwerks reagieren. Beispiele hierfür sind Verbindungen, die pro Molekül mindestens zwei der folgenden reaktiven Gruppen aufweisen: Epoxid-, Aziridin-, Isocyanat- Säurechlorid-, Carbodiimid- oder Carbonylgruppen, ferner z.B. 3,4-Dihydroxy-imidazolinon und dessen Derivate (®Fixapret@-Marken der BASF).

Wie bereits oben dargelegt, benötigen Nachvernetzer mit reaktiven Gruppen wie z.B. Epoxid- und Isocyanatgruppen komplementäre reaktive Gruppen im zu vernetzenden Polymer. So reagieren Isocyanate beispielsweise mit Alkoholen zu Urethanen, mit Aminen zu Harnstoffderivaten, während Epoxide mit diesen komplementären Gruppen zu Hydroxyethern bzw. Hydroxyaminen reagieren.

Unter Nachvernetzung wird auch die photochemische Aushärtung, eine oxydative oder eine luft- oder feuchtigkeitsinduzierte Aushärtung der Systeme verstanden.

Die oben angegebenen Monomeren und Vernetzer können beliebig und zielgerichtet in der Weise miteinander kombiniert und (co-)polymerisiert werden, daß ein gegebenenfalls vernetztes (Co-)polymerisat mit dem gewünschten Brechungsindex und den erforderlichen Stabilitätskriterien und mechanischen Eigenschaften erhalten wird.

Es ist auch möglich, weitere gängige Monomere, z.B. Acrylate, Methacrylate, Vinylester, Butadien, Ethylen oder Styrol, zusätzlich zu copolymerisieren, um beispielsweise die Glastemperatur oder die mechanischen Eigenschaften der Kern- und Schalepolymeren nach Bedarf einzustellen.

Verfilmbare Kern/Schale-Partikel, deren Herstellung und deren Verfilmung zu Dispersionsfilmen, welche ganz besonders vorteilhaft für die erfindungsgemäßen Laser-Verstärkermedien geeignet sind, werden detailliert in der Europäischen Patentanmeldung EP-A 0 955 323 der Anmelderin beschrieben. Auf die Offenbarung dieser Anmeldung wird hiermit ausdrücklich bezug genommen.

Die erfindungsgemäß besonders bevorzugten Polymerdispersionen bestehen aus einem Elastomer mit einer Kristallsturktur, die eine Bragg-Streuung verursacht. Die gewünschte Kristallgitterabstände können durch geziehlte Einstellung der Teilchengröße der Emulsionspolymerisate kontrolliert werden. Die Herstellung der Kristalle erfolgt durch einfache Filmbildung der Dispersionen auf einem gewünschten transparenten Substrat. Bei der Filmbildung kristallisieren die Primärpartikel und die gewünschten optischen Eigenschaften werden fixiert. Farbstoffe werden in die noch flüssige Polymerdispersin dotiert. Das emittierte Licht des Farbstoffes ($\lambda_f$) erfährt nur dann eine interne Spieglung in der Polymerdispersionkristallmatrix (Gitterabstand d), wenn die Emissionswellenlänge $\lambda$ des Farbstoffes in der Matrix die Bragg-Bedingung

$$2\ d \sin\theta = m^*\lambda$$

erfüllt (m = 1,2,3, ...). Für den bevorzugten Fall der Lichtausbreitung senkrecht zur Filmoberfläche, d.h. auch senkrecht zu den Gitterebenen ist sin $\theta$ =1). Damit wird die Emissionswellenlänge des Farbstofflasers festgelegt. Durch Variation des Partikel-Partikel-Abstands in dem Polymersdipserionskristall kann die Emissionswellenlänge $\lambda_f$ des Farbstofflaser eingestellt werden. Die Einstellung des Partikel-Partikel-Abstands in dem Polymerdispersionskristall kann durch thermische, mechanische oder elektronische Einflüsse variiert werden, die eine gezielte Veränderung der Laseremission ermöglichen. So kann beispielsweise durch eine mechanische Dehnung in der Gitterebene eine Verringerung des Gitterabstands senkrecht dazu und damit eine kürzere Laserwellenlänge erzielt werden.

Gemäß einer Ausführungsform der Erfindung umfasst das Verstärkermedium wenigstens 3 Schichten, wobei das aktive Medium mit den zur Emission von Laserlicht anregbaren Teilchen eine mittlere Schicht bildet, die zwischen benachbarten Dispersionsfilmen angeordnet ist, welche als optische Rückkopplungsmittel dienen. Folglich kann sich Laserlicht, das in der Zwischenschicht erzeugt wird, in dieser frei ausbreiten, und wird dann an den angrenzenden Dispersionsfilmen zurückreflektiert. Bei Diodenlasern kann man eine ähnliche Anordnung durch geeignet modulierte Halbleiterstrukturen erzeugen und gebraucht dort den Begriff der "verteilte Bragg-Reflektoren" (DBR: distributed Bragg-reflectors). Die Zwischenschicht kann beispielsweise ein Polymerfilm sein, der mit einem geeigneten Laserfarbstoff oder einem anderen geeigneten aktiven Medium dotiert ist. Eine derartige Zwischenschicht sollte einfach mit den als Bragg-Reflektoren wirkenden Dispersionsfilmen beschichtet werden können. Die Reflektionseigenschaften der Dispersionsfilme hängen auch von der Schichtdicke der Filme ab. Bei der vorliegenden Ausführungsform kann eine Schicht so ausgelegt sein, dass nahezu 100% Reflexion erreicht wird, während die andere Schicht einen weniger hohen Reflexionsgrad aufweisen kann, so dass eine in eine Richtung gerichtete Emission des Laserstrahls gewährleistet ist.

Gemäß einer anderen Ausführungsform der Erfindung kann das aktive Medium mit den anregbaren Teilchen

auch das Rückkopplungsmedium umfassen. In diesem Fall kann das aktive Medium als polymerer Dispersionsfilm ausgebildet sein, der mit geeigneten Laserfarbstoffen dotiert ist.

Gemäß einer anderen Variante, können die aktiven Teilchen, also beispielsweise der Laserfarbstoff, kovalent mit Bestandteilen des polymeren Dispersionsfilms verbunden sein. Es ist auch möglich, anstelle herkömmlicher Laserfarbstoffe ein polymeres Material zu verwenden, das stimulierte Lichtemission zeigt. Derartige Eigenschaften wurden beispielsweise für konjugierte Polymere, wie Poly(p-Phenylvinyl) beschrieben (Kallinger et al., *Adv Mater,* 1998, 10, Seiten 920 ff).

Aufgrund der großen Vielfalt von kommerziell erhältlichen Verbindungen stellen jedoch die klassischen Laserfarbstoffe die bevorzugten anregbaren Teilchen der vorliegenden Erfindung dar. Geeignete Laserfarbstoffe werden beispielsweise beschrieben in *Ullmanns Encyclopedia of Industrial Chemistry,* 5th Edition, Vol. A15, Seiten 151 ff. Geeignete Farbstoffe umfassen beispielsweise Polyphenyl- und heteroaromatische Verbindungen, Stilben-, Cumarin-, Xanthen- oder Methinfarbstoffe.

Besonders bevorzugt werden weitgehend monodisperse Partikel zur Herstellung von polymeren Dispersionsfilmen als Rückkopplungsmedium von Festkörper-Farbstofflasern verwendet, da derartige Systeme zu hochgeordneten Strukturen verfilmen können. Die Herstellung geeigneter monodisperser Kern/Schale-Partikel wird ebenfalls in EP-A 0 955 323 beschrieben.

Die vorliegende Erfindung betrifft auch einen Festkörper-Farbstofflaser, welcher das vorstehend beschriebene Verstärkermedium umfasst und welcher Pumpmittel aufweist, die zur Anregung der Teilchen des aktiven Mediums ausgelegt sind. Besonders bevorzugt werden optische Pumpquellen, insbesondere Pumplaser zur Anregung verwendet. Prinzipiell ist jede Pumpquelle geeignet, die elektromagnetische Strahlung mit höherer Frequenz als die Frequenz der Laseremission aussendet. Bevorzugte Pumplaser umfassen Dauerstrichlaser, wie beispielsweise Argon- oder Kryptonlaser, gepulste Laser, wie beispielsweise Stickstoff-, Excimer- oder frequenzvervielfachte Nd:YAG-Laser.

Die vorliegende Erfindung wird im folgenden unter Bezugnahme auf beigefügte Zeichnungen detaillierter erläutert.

In den Zeichnungen zeigt:

- Figur 1 eine schematische Darstellung einer bevorzugten Ausführungsform eines erfindungsgemäßen Festkörper-Farbstofflasersystems;
- Figur 2 eine schematische Darstellung einer ersten Ausführungsform des erfindungsgemäßen Verstärkermediums;
- Figur 3 eine Variante des Verstärkermediums der Figur 2;
- Figur 4 eine schematische Darstellung einer zweiten Ausführungsform des erfindungsgemäßen Verstärkermediums;
- Figur 5 eine Variante des Verstärkermediums der Figur 4;
- Figur 6 ein zum Durchstimmen der Laseremissionswellenlänge in eine Dehnvorrichtung eingespanntes elastomeres Verstärkermedium; und
- Figur 7 eine schematische Darstellung der Struktur des im erfindungsgemäßen Verstärkermedium eingesetzten polymeren Dispersionsfilm.

Figur 1 zeigt eine bevorzugte Ausführungsform des erfindungsgemäßen Festkörper-Farbstofflasers. Der Festkörper-Farbstofflaser umfasst Pumpmittel, beispielsweise einen frequenzverdoppelten Nd:YAG Laser 10. Geeignete Mittel 11 zur Steuerung der Pulsenergie des Pumplasers 10, beispielsweise Polarisatoren, λ/2-Platten usw. Es werden optische Mittel wie Spiegel 12, 13 und eine Linsenanordnung 14 verwendet, um den Pumplaserstrahl 15 auf das erfindungsgemäße Verstärkermedium 16 zu fokussieren. Eine Linse 17 sammelt das emittierte Laserlicht und koppelt es in einen faseroptischen Wellenleiter 18. Im dargestellten Beispiel wird der Pumplaserstrahl im wesentlichen senkrecht zur Schichtoberfläche des Verstärkermediums 16 eingestrahlt. Ein leichtes verkippen des hier folienartigen Verstärkermediums 16 kann aber vorteilhaft sein, um den Anregungsstrahl und den im Verstärkermedium erzeugten Laserstrahl räumlich voneinander zu trennen. Da die Periodizität parallel und senkrecht zur Schichtebene im wesentlichen gleich ist (vgl. Figur 7), kann im dargestellten Beispiel Laseremission sowohl senkrecht als auch parallel zur Schicht erfolgen. Das farbstoffdotierte Verstärkermedium ist typischerweise 5 bis 100 μm dick und die Farbstoffkonzentration beträgt typischerweise $10^{-4}$ bis $10^{-2}$ Mol.

In Figur 2 ist ein Querschnitt einer ersten Ausführungsform des erfindungsgemäßen Verstärkermediums 16 dargestellt. Das Verstärkermedium besteht aus einem einzelnen farbstoffdotierten Dispersionsfilm 20. Angeregt wird das Verstärkenmedium durch longitudinales optisches Pumpen mittels eines (in Figur 2 nicht dargestellten Pumplasers). Der Pumplaserstrahl 15 und der Farbstofflaserstrahl 17 breiten sich kolinear in dem Verstärkermedium 20 aus, wie dies in Figur 2 durch die Pfeile angedeutet ist. Ohne weitere Maßnahmen wird der Farbstofflaserstrahl aus beiden Oberflächen 21, 22 des Dispersionsfilm 20 abgestrahlt.

In Figur 3 ist eine Variante des Verstärkermediums der Figur 2 dargestellt. Die Oberfläche 21 des Verstärkermediums ist mit einer hochreflektierenden dichroitischen Beschichtung 23 versehen, die bei der Wellenlänge des Farbstofflasers im wesentlichen vollständig reflektiert, aber bei der Wellenlänge des Pumplasers lichtdurchlässig ist. Die Oberfläche 22 des Verstärkermediums 20 ist ebenfalls mit einer hochreflektierenden dichroitischen Beschichtung 24 versehen, die bei der Wellenlänge des Pumplasers im wesentlichen vollständig reflektiert, aber bei der Wellenlänge des Farbstofflasers lichtdurchlässig ist. Durch die spezielle Anordnung der Ausführungsform der Figur 3 wird eine gerichtete Emission des Farbstofflaserstrahls gewährleistet, der das Verstärkermedium nur über die Fläche 22 verlassen kann.

Die Ausführungsformen der Figuren 4 und 5 entsprechen im Wesentlichen denen der Figuren 2 bzw. 3, allerdings mit dem Unterschied, dass das Verstärkermedium 20 aus drei Schichten besteht: Das aktive Medium wird von einer Zwischenschicht 25 gebildet, welche den Laserfarbstoff enthält, aber selbst keine verteilte Rückkopplung aufweist. Die Schicht 25 ist zwischen zwei Dispersionsfilmen 26, 27 angeordnet, die als verteilte Reflektoren für das in dem aktiven Medium 25 emittierte Laserlicht wirken. Der Reflektionsgrad der Schicht 27 ist aber verglichen mit dem Reflektionsgrad der Schicht 26 etwas reduziert, so dass eine gerichteter Emission des Laserstrahl 17 gewährleistet wird.

Eine gerichtete Emission des Laserstrahls kann außerdem verbessert werden, wenn, wie in Figur 5 dargestellt, zusätzliche reflektierende Beschichtungen 23, 24 vorgesehen sind. Die reflektierenden Beschichtungen 23 und 24 können dabei den reflektierenden Beschichtungen 23, 24 der Ausführungsform der Figur 3 entsprechen.

Figur 6 zeigt eine Aufsicht auf das Verstärkermedium 20, welches im dargestellten Beispiel als elastomerer Dispersionsfilm ausgebildet ist. Das Verstärkermedium ist in den Klemmen 30 einer Dehneinrichtung fixiert. Durch Ausüben von biaxialen Zugkräften kann der Gitterabstand d (vergl. Fig. 7) in einem zentralen Bereich 29 senkrecht zur dargestellten Filmebene verringert werden, was bei senkrecht zur Filmebene eingestahltem Pumpstrahl zu einer Verkürzung der Wellenlänge des ebenfalls senkrecht zur Filmebene emittierten Laserlichts führt. Somit kann in einfacher Weise ein mechanisch durchstimmbarer Festkörper-Farbstofflaser realisiert werden. Gleichzeitig werden auch die Gitterabstände in der Filmebene verändert, so dass Laserlicht nur noch im Wesentlichen senkrecht zur Oberfläche des Dispersionsfilms emittiert werden kann.

In Figur 7 ist der prinzipielle Aufbau des Dispersionsfilms 31 des erfindungsgemäßen Verstärkermediums dargestellt. Der Dispersionsfilm 31 besteht aus Kern/Schale-Partikeln, wobei das Schalenmaterial wie in EP-A 0 955 323 beschrieben verfilmbar ist. Es entsteht ein regelmäßiges Gitter aus Kernen 32, die in der aus Schalenmaterial bestehenden verfilmten Matrix 33 angeordnet sind. Ein einfallender Lichtstrahl 34 wird an den im Abstand d angeordenten Gitterebenen so gebeugt, dass bei einem Winkel θ lediglich Licht einer gemäß der Bragg-Gleichung definierten Wellenlänge konstruktiv interferieren, d.h. reflektiert werden kann.

Das erfindungsgemäße Verstärkermedium kann in einer Justiereinrichtung montiert sein, wie sie in US 6,141,367 für Verstärkermedien aus polymeren cholesteren Flüssigkristallen beschrieben ist. Eine derartige Justiereinrichtung ermöglicht eine Bewegung des Verstärkermediums gegenüber der Pumpquelle. Ebenso kann das erfindungsgemäße Verstärkermedium aus Streifen mit unterschiedlicher Laserwellenlänge aufgebaut sein, so dass das Durchstimmen des Lasers auch durch eine reine Translationsbewegung des Vertärkermediums relative zum Pumpstrahl realisiert werden kann.

<u>Anwendungsbeispiel</u>

Die Polymerdispersion wurde gemäß Patent EP-A 0 955 323 hergestellt und wie dort beschrieben zu einer elastischen Schicht verfilmt. Um Laserstrahlung zu erzeugen, wird zunächst der Fluoreszenzfarbstoff DCM (4-(dicyanomethylene)-2-methyl-6-(4-dimethylamino-styryl)-4 H-pyran) zu der flüssigen Polymerdispersion hinzugegeben. Die Farbstoffkonzentration wurde so gewählt, daß nach der Trocknung des Dispersionfilms noch 0,2 Gew.% von DCM in der Polymerdispersion enthalten sind. Die dotierte Dispersion wird mit einem 200 μm Rackel auf eine Polyesterfolie aufgerackelt und bei Raumtemperatur getrocknet. Der Gitterabstand d des so gebildeten kolloidalen Kristalls betrug ca. 330 nm.

Der mit dem Fluoreszenzfarbstoff dotierte Polymerdispersionsfilm wurde in einem Farbstofflaser gemäß Fig. 1 als Verstärkermedium eingesetzt. Als Pumplaserstrahl wurde ein frequenzverdoppelter Nd:YAG-Laser mit einer Pulsdauer von 35 ps bei einer Wellenlänge von 532 nm verwendet. Die Pulsenergie wurde mit Hilfe eines Polarisators und eines λ/2-Plättchens eingestellt. Der Pumplaserstrahl wurde auf das Substrat mit einer Linse mit einer Brennweite f= 20 cm und einem Durchmesser von 2.5 cm fokussiert . Der Strahlduchmesser auf dem Dispersionsfilm hat 300 μm betragen. Das emittierte Laserlicht wurde gesammelt und auf ein Spektrometer fokussiert. Die Emission wurde mittels CCD-Detector im kontinuierlichen Modus aufgenommen. Oberhalb der Laserschwelle konnte abhäng von der Dehnung des Dispersionsfilms Laseremission im Bereich von 620 bis 570 nm beobachtet werden.

## Patentansprüche

1. Verstärkermedium für Festkörper-Farbstofflaser, umfassend:

   ein im wesentlichen festes aktives Medium (16), das mindestens eine Sorte aktivierbarer Teilchen enthält, die zur Emission von Laserlicht eines bestimmten wellenlängenbereichs angeregt werden können,
   optische Rückkopplungsmittel, welche einen Resonator für das Laserlicht definieren, wobei die Rückkopplungsmittel ein im wesentlichen festes Rückkopplungsmedium mit einer periodischen Struktur aufweisen,das als ein polymerer Dispersonsfilm (20) mit kristalliner Struktur ausgebildet ist,

   **dadurch gekennzeichnet,**
   **dass** der polymerer Dispersonsfilm verfilmbare. Kern/Schale-Partikel umfasst, wobei die Kern/Schale-Partikel ein Kernmaterial und ein Schalenmaterial aufweisen, das ein Zweiphasensystem ausbilden kann, wobei das Schalenmaterial verfilmbar ist und das Kernmaterial unter den Bedingungen der Verfilmung der Schale im wesentlichen formbeständig ist.

2. Verstärkermedium gemäß Anspruch 1, **dadurch gekennzeichnet, dass** das Kernmaterial eine monodisperse Größenverteilung im Bereich von 100 bis 700 nm, vorzugsweise von 150 bis 500 nm, insbesondere von 200 bis 400 nm aufweist.

3. Verstärkermedium gemäß Anspruch 2, **dadurch gekennzeichnet, dass** das Kernmaterial einen Polydispersitätsindex P.I. von unter 0,4, vorzugsweise unter 0,3, insbesondere unter 0,2 aufweist.

4. Verstärkermedium gemäß einem der Ansprüche 1 bis 3, **dadurch gekennzeichnet, dass** ein Unterschied $\Delta n$ zwischen den Brechungsindizes des Kernmaterials und des Schalenmaterials besteht, der mindestens 0,001, vorzugsweise mindestens 0,01 insbesondere mindestens 0,1 beträgt

5. verstärkermedium gemäß einem der Ansprüche 1 bis 4, **dadurch gekennzeichnet, dass** das Gewichtsverhältnis von Kern:Schale der Partikel 1:3 bis 20:1, vorzugsweise 2:1 bis 10:1, insbesondere 2,5:1 bis 5:1 beträgt.

6. Verstärkermedium gemäß einem der Ansprüche 1 bis 5, **dadurch gekennzeichnet, dass** der Dispersionsfilm ein elastomerer Dispersionsfilm ist.

7. Verstärkermedium gemäß einem der Ansprüche 1 bis 6, **dadurch gekennzeichnet, dass** das aktive Medium zwischen zwei Dispersionsfilmen angeordnet ist.

8. Verstärkermedium gemäß einem der Ansprüche 1 bis 6, **dadurch gekennzeichnet, dass** das aktive Medium und das Rückkopplungsmedium ein einziges Medium sind, das von wenigstens einem, die aktivierbaren Teilchen enthaltenden Dispersionsfilm gebildet wird.

9. Verstärkermedium gemäß Anspruch 8, **dadurch gekennzeichnet, dass** die aktivierbaren Teilchen in dem Dispersionsfilm gelöst sind.

10. Festkörper-Farbstofflaser, welcher ein Verstärkermedium nach einem der Ansprüche 1 bis 9 und Pumpmittel umfasst, die zur Anregung der aktivierbaren Teilchen des Verstärkermediums ausgelegt sind.

## Claims

1. An amplifying medium for solid-state dye lasers, comprising:

   an essentially solid active medium (16) which comprises at least one type of activatable particle which can be excited to emit laser light in a certain wavelength range,
   optical feedback means which define a resonator for the laser light, the feedback means comprising an essentially solid feedback medium which has a periodic structure and is formed as a polymeric dispersion film (20) having a crystalline structure, wherein the polymeric dispersion film comprises core/shell particles which can be formed into a film, the core/shell particles having a core material and a shell material which are able to form a two-phase system, where the shell material can be formed into a film, and the core material being

essentially dimensionally stable under the conditions of film formation of the shell.

2. The amplifying medium according to claim 1 wherein the core material has a monodisperse size distribution in the range from 100 to 700 nm, preferably from 150 to 500 nm, in particular from 200 to 400 nm.

3. The amplifying medium according to claim 2 wherein the core material has a polydispersity index P.I. of less than 0.4, preferably less than 0.3, in particular less than 0.2.

4. The amplifying medium according to any one of claims 1 to 3 wherein the difference An between the refractive indices of the core material and of the shell material is at least 0.001, preferably at least 0.01, in particular at least 0.1.

5. The amplifying medium according to any one of claims 1 to 4 wherein the core:shell weight ratio of the particles is from 1:3 to 20:1, preferably from 2:1 to 10:1, in particular from 2.5:1 to 5:1.

6. The amplifying medium according to any one of claims 1 to 5 wherein the dispersion film is an elastomeric dispersion film.

7. The amplifying medium according to any one of claims 1 to 6 wherein the active medium is arranged between two dispersion films.

8. The amplifying medium according to any one of claims 1 to 6 wherein the active medium and the feedback medium are a single medium which is formed by at least one dispersion film comprising the activatable particles.

9. The amplifying medium according to claim 8 wherein the activatable particles are dissolved in the dispersion film.

10. A solid-state dye laser which comprises an amplifying medium according to any one of claims 1 to 9 and pump means designed to excite the activatable particles of the amplifying medium.

## Revendications

1. Milieu amplificateur pour laser à colorant à solide, comprenant :

un milieu actif essentiellement solide (16) qui contient au moins une sorte de particules activables qui peuvent être excitées pour l'émission de lumière laser d'une gamme de longueurs d'onde déterminée,
des moyens de réinjection optiques qui définissent un résonateur pour la lumière laser, les moyens de réinjection présentant un milieu de réinjection essentiellement solide ayant une structure périodique qui est réalisée sous la forme d'un film de dispersion polymère (20) à structure cristalline,

**caractérisé en ce que**
le film de dispersion polymère comporte des particules à noyau/enveloppe qui peuvent être converties en film, les particules à noyau/enveloppe présentant une matière de noyau et une matière d'enveloppe qui peut réaliser un système à deux phases, la matière d'enveloppe pouvant être convertie en film et la matière de noyau étant sensiblement résistante à la déformation dans les conditions de conversion en film de l'enveloppe.

2. Milieu amplificateur suivant la revendication 1, **caractérisé en ce que** la matière de noyau présente une répartition de tailles monodispersée dans la gamme de 100 à 700 nm, de préférence de 150 à 500 nm, en particulier de 200 à 400 nm.

3. Milieu amplificateur suivant la revendication 2, **caractérisé en ce que** la matière de noyau présente un indice de polydispersité P.I. inférieur à 0,4, de préférence à 0,3, en particulier à 0,2.

4. Milieu amplificateur suivant l'une des revendications 1 à 3, **caractérisé en ce qu'**une différence $\Delta n$ existe entre l'indice de réfraction de la matière de noyau et celui de la matière d'enveloppe, qui est d'au moins 0,001, de préférence d'au moins 0,01, en particulier d'au moins 0, 1 .

5. Milieu amplificateur suivant l'une des revendications 1 à 4, **caractérisé en ce que** le rapport pondéral entre noyau

et enveloppe des particules est de 1/3 à 20/1, de préférence de 2/1 à 10/1, en particulier de 2,5/1 à 5/1.

6. Milieu amplificateur suivant l'une des revendications 1 à 5, **caractérisé en ce que** le film de dispersion est un film de dispersion élastomère.

7. Milieu amplificateur suivant l'une des revendications 1 à 6, **caractérisé en ce que** le milieu actif est agencé entre deux films de dispersion.

8. Milieu amplificateur suivant l'une des revendications 1 à 6, **caractérisé en ce que** le milieu actif et le milieu de réinjection sont un milieu unique qui est formé d'au moins un film de dispersion contenant les particules activables.

9. Milieu amplificateur suivant la revendication 8, **caractérisé en ce que** les particules activables sont dissoutes dans le film de dispersion.

10. Laser à colorant à solide, qui comporte un milieu amplificateur suivant l'une des revendications 1 à 9 et des moyens de pompage qui sont conçus pour l'excitation des particules activables du milieu amplificateur.

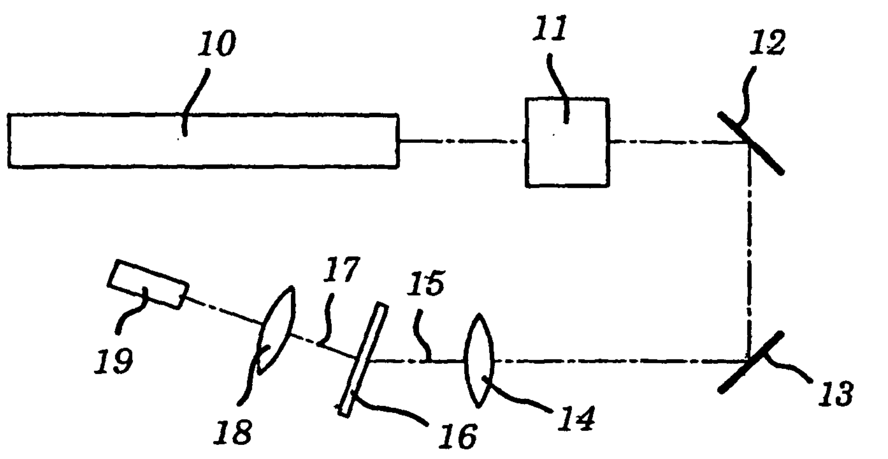


Fig. 1

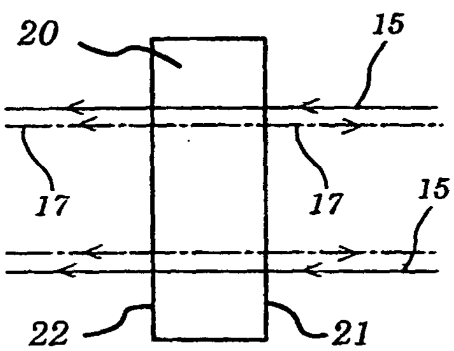


Fig. 2

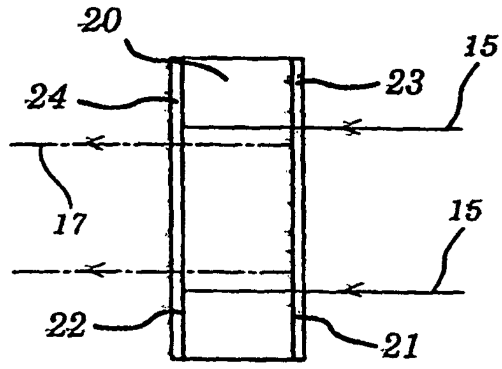


Fig. 3

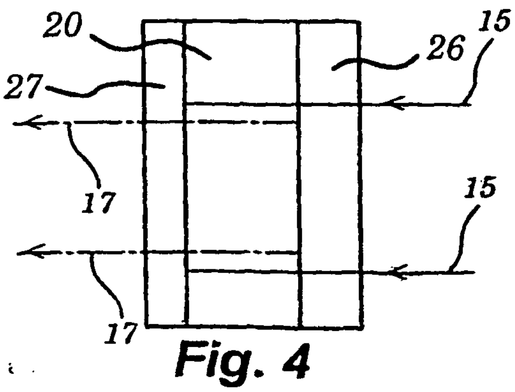


Fig. 4

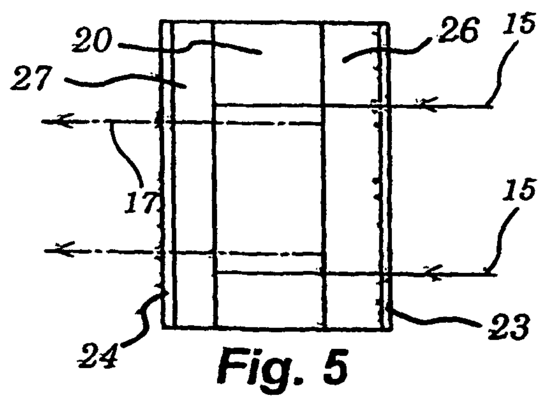


Fig. 5

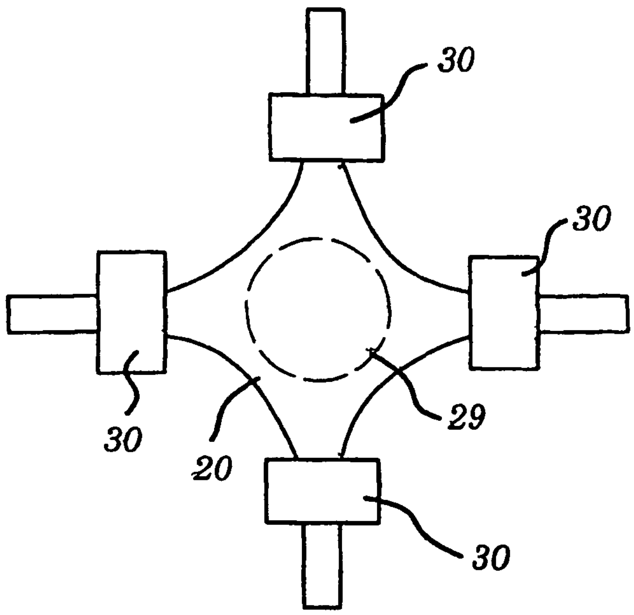


Fig. 6

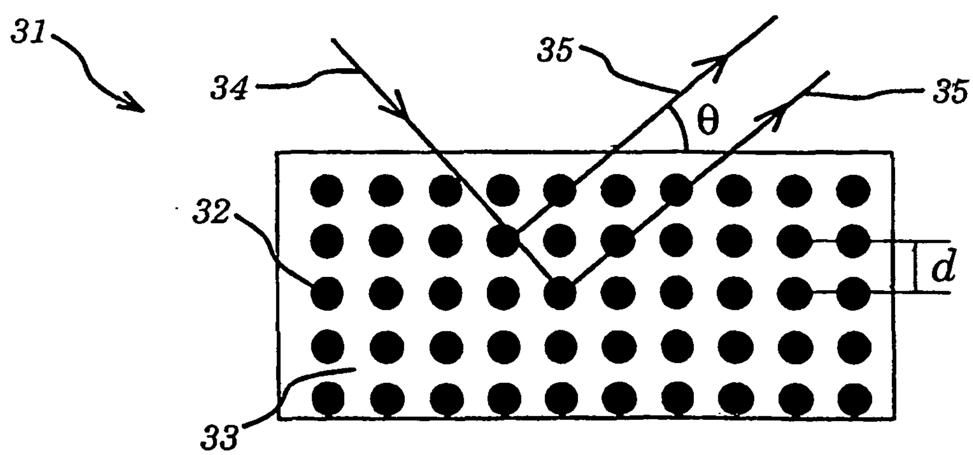


Fig. 7